# EUROPEAN PATENT APPLICATION

(11) **EP 4 756 548 A1**
(43) Date of publication of application: **10.06.2026**
(21) Application number: 24218002.4
(22) Date of filing: 06.12.2024
(51) Int. Cl.: G05B 23/02

(54) **A COMPUTER-IMPLEMENTED METHOD FOR ASSESSING TRUSTABILITY OF OPERATOR FEEDBACK FROM AN OPERATOR OF A CONTROL SYSTEM OF AN INDUSTRIAL PLANT**

(71) Applicant: ABB SCHWEIZ AG, 5400 Baden (CH)
(72) Inventor: DIX, Marcel, 78476 Allensbach (DE); MANCA, Gianluca, 80935 München (DE); SHARMA, Divyasheel, 560048 Bangalore, Karnataka (IN); MADUSKAR, Deepti, 462042 Bhopal (IN); K R, Chandrika, 560078 Bangalore (IN); BORRISON, Reuben, 68782 Brühl (DE); NAKAS, Georgios, 68161 Mannheim (DE)
(74) Representative: Maiwald GmbH

(57) **Abstract**

A computer-implemented method for assessing trustability of operator feedback from an operator (100) of a control system (10) of an industrial plant (10), wherein the method comprises:
- obtaining current error data from an error prediction model (15) of the control system (10), wherein the current error data is indicative of a current error (2) in the industrial plant (20), and wherein the error prediction model (15) is based on machine learning;
- obtaining different error data, wherein the different error data is indicative of one or more different errors (4, 5), which are different from the current error (2);
- providing an operator request (6) on an operator interface (14) of the control system (10), wherein the operator request (6) relates to the current error (2) and the one or more different errors (4, 5);
- obtaining operator feedback from the operator (100) on the operator interface (14) in response to the operator request (6) provided thereon; and
- assessing the trustability of the operator feedback based on the operator feedback, the current error data and the different error data.

## Description

### TECHNICAL FIELD

The present invention relates to a computer-implemented method for assessing trustability of operator feedback from an operator of a control system of an industrial plant, one or more computer program products, a data processing system, and a control system of an industrial plant.

### BACKGROUND

Control systems for industrial plants include a combination of hardware and software for a wide range of applications of industrial plants. These applications include but are not limited to mining extraction, transportation and processing, chemical manufacturing plants, water and wastewater treatment, electric power generation plants, and pharmaceutical processing facilities. The used control systems are generally engineered to oversee and manage industrial equipment and processes for the specific application.

During the operation of these industrial plants, errors can occur, e.g., within one or more industrial equipments. For example, a sensor may return an unusual or unexpected measurement value out of certain boundaries, which can but not necessarily must indicate an error, in particular an anomality. To determine whether this measurement value or generally whatever industrial plant data that is unusual or without certain boundaries of expectation is actually an error or anomality, an operator of the control system may be asked. The operator may for example be a control engineer or technician, who can for example currently be on duty to control or supervise the industrial plant via the control system. The operator must then assess whether the unusual measurement value or industrial plant data indeed is caused by an error or anomality, i.e. whether it is a true error or anomality, or a false error or anomality.

### SUMMARY

Since the issue of determining an error or anomality based on the industrial plant data is very complex, error prone and time consuming, an error prediction model using machine learning may be used to reduce complexity, time and error rate of these determinations. Specifically, a machine learning technique of such error prediction model or, in other words, error prediction or determination model may be used to determine whether the industrial plant data (i.e., generally the data that is collected by the industrial plant and provided or forwarded to the control system of the industrial plant) exhibits errors or anomalities of the industrial processes executed by the industrial plant (e.g., due to a faulty technical equipment such as a faulty sensor).

Such a machine learning model for error recognition may be trained based on historic industrial plant data from the previous operation of the same or different industrial plants, where it may be known what causes or caused the unusualties or errors in the data such that the machine learning model can learn from these cases. In other words, to train a reliable machine learning model, it is important to have a ground truth. In the present field, these may be historic examples where the correct answer for a recognition or, in other words, determination or prediction of an error or anomaly is known. This knowledge can be referred to as "labels". Hence, for building an error recognition or anomaly detection model, it is important to have examples for known anomalies from the past. These labels may be important for model testing, to be able to assess if the model makes the right determinations or predictions.

A challenge in the industrial plant domain is that the available historic industrial plant data available for model training and testing is typically not labeled. To improve the performance of machine learning models such as to correct false model predictions in future, an approach is to ask the user or operator for feedback to the system. This feedback can be acquired during the runtime of the machine learning model. This can also be referred to as interactive machine learning. Here, user feedback can be acquired to ask the user if a given model prediction appears to be correct or not, meaning if a current error recognized or predicted by the model is true or false.

In the industrial domain that user would typically be an expert (e.g. an industrial plant operator) who would have a good understanding of the given situation and who could give a good assessment (e.g., if the current plant situation based on the current industrial plant data as shown or indicated on the control system is indeed anomalous or not as the error prediction model may have predicted it). This feedback can then be used to improve the machine learning model, for example, to not predict similar plant situations as erroneous or anomalous anymore in future, if the user has labeled this error or anomaly-prediction as false.

However, a problem is that also the operator or generally user of the control system can be wrong or unsure, and thereby give wrong feedback. For example, a machine learning model may predict an industrial plant situation as anomaly. Assuming that the operator's prediction was indeed correct, i.e. there is actually an anomaly in the industrial plant. However, the operator may give feedback that this prediction should be wrong because they wrongly assume that the given industrial plan situation is normal based on the current industrial plant data. When using this feedback to accordingly train the machine learning model, this would lead to the unfortunate condition that the machine learning model will not predict this industrial plant situation anymore as anomalous in future, even though it is anomalous. Hence, wrong user feedback can negatively impair the machine learning model.

The above problem or need is at least partially solved or alleviated by the subject matters of the independent claims of the present disclosure, wherein further examples are incorporated in the dependent claims.

According to an aspect of the present disclosure, there is provided a computer-implemented method for assessing trustability of operator feedback from an operator of a control system of an industrial plant, wherein the method comprises:
- obtaining current error data from an error prediction model of the control system, wherein the current error data is indicative of a current error in the industrial plant, and wherein the error prediction model is based on machine learning;
- obtaining different error data, wherein the different error data is indicative of one or more different errors, which are different from the current error;
- providing an operator request on an operator interface of the control system, wherein the operator request relates to the current error and the one or more different errors;
- obtaining operator feedback from the operator on the operator interface in response to the operator request provided thereon; and
- assessing the trustability of the operator feedback based on the operator feedback, the current error data and the different error data.

The method is based on the finding that to protect the model robustness of the error prediction model that is based on machine learning from wrong operator feedback, it is essential to be able to assess the trustability or, in other words, trustworthiness of this feedback. This means that the method knows or has as a result whether the operator with their feedback can be trusted, specifically in terms of their knowledge and/or experience to confirm current errors as true or false, e.g. for the purpose of training the machine learning model. The trustability may generally include or be in the form of faithfulness (i.e. that it adheres to reality, meaning the reality of whether an error is present or not) and/or reliability (i.e. whether the user feedback can be relied on or trusted, e.g. for the purpose of training the machine learning model).

However, this poses the problem how to assess if the operator feedback is correct or trustworthy, to avoid incorporating wrong operator feedback into the training (including initial training or retraining), tuning or evaluating of the error prediction model or, in other words, error recognition model. This problem is solved by the method through the providing of operator requests that are not only relating to current error data from the error prediction model.

Specifically, the current error data may be the output of the error prediction model using machine learning, which can predict but not necessarily certainly determine a current error in the industrial plant in a given situation. When providing an operator request on the operator interface, e.g. by a prompt or task for the operator, which relates to the current error only, the operator's trustworthiness cannot be assessed. It can only be assumed that the operator is a trained technician or engineer but not how much experience they have to determine errors and similar. For example, when basing or relating the operator request only to the current error, a prompt or task to the operator displayed on a screen of the operator interface may be: "Is the predicted current error true or false?", upon which the operator may be requested to provide operator feedback by selecting a virtual true field or virtual false field displayed on the screen using a computer mouse or other input means of a computer of the operator interface. Consequently, this operator feedback is obtained by the control system's computer. However, this does not allow to assess the trustworthiness of the operator.

Thus, the method proposes to also base or relate the operator request that is provided on one or more different errors, the different errors being different from the current error. The different errors may generally be different from the current error in any way, e.g. in that they indicate a different type of error, different data, e.g. values, of an error, different location or area of an error, and similar. The different error may not be a current error that is determined, recognized or predicted by the error prediction model. Hence, the different error may not be reflecting a current industrial plant situation or the current industrial plant data, which may be based on the values of the technical equipment such as sensors, actuators, etc. that are providing these values to the control system. However, these one or more different errors may be used in the process to assess the trustability of the operator feedback. Instead, the different errors may be samples of errors as further described below.

Specifically, while the error prediction model does not certainly know whether the error prediction of the current error is true or false, it may generally be known from the different error data, whether the different errors or samples indicated thereby are generally true or false errors with respect to the industrial plant, whether these are similar to the current error or not, when these occurred when they are based on historical plant data, and much more and similar to this. Hence, there is the possibility to use this different error data in the operator request to request operator feedback which assesses the trustability of the operator, specifically their knowledge or skills with respect to error understanding and recognition or prediction. As a non-limiting example, the operator can be asked one or more questions on the one or more different errors, in particular in relation to the current error), for which the error prediction model may know the answer(s), at least with a certain confidence. Thereby, the operator feedback on the operator request relating to both, the current error and the one or more different errors, can be be evaluated by comparing the operator's answer to the known or, in other words, correct answer.

If there is a match, e.g. full match on all answers or responses or sufficient minimum match (e.g. 80% or any other threshold of responses or answers correct), the method may assess that the operator feedback can be trusted or assess high trustability of the operator feedback. If there is no or no sufficient match, the method may assess that the operator feedback cannot be trusted or assess low trustability of the operator feedback. Also, different trustability scores or trustworthiness scores may be determined when assessing the trustability. Such score may for example correlate to the number of matched or correct responses or answers in comparison to the number of total questions or requests. Such score may be taken into account when considering usage or using the operator feedback, e.g. for training, evaluating or tuning the error prediction model and/or for evaluating whether the current error is true or false.

The method may also be explained as analogy to the generally known captcha queries that ask users during the browsing of websites on the internet to select images which are the same, e.g. to select all images that contain a bus. By assessing the degree of matches, it is possible to determine how sure the user is about their feedback. In the case of captcha queries, the goal is rather to determine if the user is really a human (e.g. for the purpose of locking out bots), but in the present use of this disclosure, the goal is to find out how sure the operator or user is for the purpose of using that operator feedback, e.g. for model training. In the present use, the task is also not to label images, but to label industrial plant situations, such as industrial faults.

As later explained herein, the different errors may be additional similar errors or examples of errors from historic industrial plant data, specifically for the error recognition. Also, there may be dissimilar examples for such focal prediction or recognition. In the case of industrial plants, the error data may generally comprise multivariate time series data collected from the technical equipment, e.g. sensors, in the industrial plant. Hence, the examples may represent multivariate time series. This can be achieved, e.g. with the help of a Siamese Neural Network, which is a useful approach in the present domain of machine learning for finding similar examples in the historic industrial plant data. Also, alternative approaches, such as clustering approaches from statistical learning may be used to find the similar examples or errors.

Generally, similar and/or dissimilar errors or examples, along with the sample for the focal model prediction may be presented to the operator. Specifically, the model prediction for the focal sample, i.e. the current error, may also be indicated or shown to the user. In other words, the providing of the operator request may include the information that the current error is considered to be true or, in other words, a true error. But, the operator request does not need to indicate what the similar and/or dissimilar errors are. As explained above, the answer to this or, in other words, information about this may only be known to the computer or control system executing the method. In terms of the above-mentioned analogy to the captchas, this would mean that one image of a bus would say "this is a bus, click on all the other images that also contain busses". This reference image is the present focal model prediction or recognition or, in other words, the current error in the herein disclosed method. Assuming that the focal model prediction says that the sample represents an anomaly and the user confirms this sample to be indeed an anomaly. Furthermore assuming that the user selects all similar samples correctly to be similar and identifies also all dissimilar examples as such. Then there is a high confidence that the user is sure, i.e. that the user feedback is correct and that the user's feedback can be used e.g. for model tuning. However, with reduced accuracy of identifying similar and dissimilar examples, the confidence in the user feedback declines. A threshold may be used at which confidence it is decided to disregard the user feedback for further use, e.g. for model tuning.

Note that the terms recognition, prediction and determination may be used interchangeably or combinatory herein and any of these terms can include the literal meaning of the respective other terms. Similarly, the terms error, sample and anomaly may be used herein interchangeable or combinatory and any of these terms can include the literal meaning of the respective other terms. Similarly, the terms request, question and task may be used herein interchangeable or combinatory and any of these terms can include the literal meaning of the respective other terms. Similarly, the terms feedback, response and answer may be used herein interchangeable or combinatory and any of these terms can include the literal meaning of the respective other terms.

The method of the first aspect may in particular be an at least partially or fully computer implemented method. This means that at least one, multiple or all of the steps of the method may be carried out by a data processing system, which may comprise one or more computers or data processing apparatuses, which may comprise one or more processors and data storages or memories. Different steps may be carried out by the same or by different computers of the data processing system. In particular, the method may be carried out by or on the control system.

Generally, the entire method may be executed on one or more computers, that may be executing or be part of the control system of the industrial plant. Specifically, the control system may comprise one or more computers, which may also be in a distributed computer environment. Besides hardware, the control system may also have software parts enabling the control system to take control of the industrial plant, e.g. of technical equipment or devices of the industrial plant, such as sensors, actuators, etc. To receive input from the operator, e.g. the operator feedback in the method, the control system may generally comprise any hardware input means such as but not limited to keyboard, computer mouse, touch display, or similar. Also, to provide any information, data or similar to the operator, e.g. the operator request, the control system may generally comprise any hardware output means, e.g. one or more screens or displays, speakers, or similar.

Generally, the one or more computers of the control system or, generally, the control system may be assessing the trustability of the operator feedback, in particular by using their one or more processors to calculate the trustatbility, e.g. a trustability score. Also, the one or more computers of the control system or, generally, the control system may be obtaining the current error data from the error prediction model, which may be executed on one or more of these computers or on other computers, e.g. cloud computers or servers. The error prediction model on the other hand may receive industrial plant data from the industrial plant, in particular from the technical equipment of the industrial plant such as sensors and e.g. in the form of multivariate time series data. Therefrom, the error prediction model may recognize, determine or predict whether there is a current error in the industrial plant or not, e.g. when there are measurement values of sensors which are out of certain predefined boundaries or historically recorded values. The different error data may also be obtained by the control system or its one or more computers. For example, the different error data may be generated or determined from historical industrial plant data or synthetically by simulation or generation of e.g. errors that are similar or dissimilar to the current error. Hence, the different error data may always be obtained or determined specifically for the current error data such that it is similar and/or dissimilar to the current error data in terms of its errors or samples that are to be considered for the operator request.

Generally, the error prediction model based on machine learning may employ any conventional or specific machine learning technique such as but not limited to anomaly detection, classification, clustering, neural networks and/or similar. As mentioned above, the model may have been trained and be re-trained and/or tuned based on current error data and/or data provided from a human operator that relates to errors or anomalies of the industrial plant, e.g. based on the operator feedback. For example, when employing anomaly detection, the error prediction model may have been pre-trained with historical data that indicated different data error cases of the industrial plant based on industrial plant data, e.g. with unusual measurement values of sensors, which were predicted or determined by a human operator to be an error or anomaly or to be no error or anomaly. Accordingly, the machine learning model learned based on such data the specific historic situations or cases in the operation of the industrial plant, which have been previously determined or predicted to be an anomaly or not, enabling it to determine, recognize or predict future unusual industrial plant data, e.g. unusual measurement values of sensors, as being either an anomaly or not with a certain level of confidence. This level of confidence of the prediction can be further increased by the present method using the trustability assessment of the method for ongoing operator feedback for new errors or, in other words, current errors that are occurring at a current time and can be dealt with in real-time.

The method may further comprise: evaluating or determining, based on the operator feedback, the current error as true or false depending on the assessed trustability of the operator feedback. In other words, depending on the assessed trustability of the operator feedback, the method or control system can decide to either trust the operator feedback or not. When a certain threshold of e.g. the herein mentioned trustabiltiy score is met by the operator feedback, the method or control system can decide to trust the operator feedback and use it to evaluate or determine the current error as true or false. Accordingly, for example, if the operator indicated with their operator feedback that the current error is indeed an error or anomaly, the method or control system may trust the operator's judgement on this given the trustability of their operator feedback reflecting their knowledge on the different error data in view of the correctly answered operator request based on the operator feedback. On the other hand, if the operator indicated with their operator feedback that the current error as assumed or predicted by the error prediction model is in fact no error or anomaly, the current error as assumed by the error prediction model is evaluated to be false and hence, the initial assessment or prediction of the machine learning model is dismissed. On the other hand, if the trustability of the operator feedback is low or not given, the operator feedback can be disregarded for evaluating whether the current error is true or false. Instead, the error prediction model's initial assessment and indication of the current error as being an error or anomaly because it has recognized it, can be followed. Alternatively, other measures can be provided where for example other operators can be requested to provide feedback or more information can be collected.

Alternatively, or additionally to the above explained evaluation of the current error as true or false, depending on the assessed trustability of the operator feedback, the method may further comprises: training, tuning or evaluating the error prediction model based on the operator feedback. Accordingly, when the trustabiltiy of the operator feedback is high (e.g. above a required threshold) or generally is given, the operator feedback may be used for training, including re-training, tuning and/or evaluating the error prediction model based on the operator feedback. This means that, for example, when the operator is trustable and their feedback indicates that the current error assumed by the machine learning model is false, this operator feedback may be used such that the machine learning model in the future will not find the same or similar current errors, which are false, based on the industrial plant data. On the other hand, with low or no trustability, the machine learning model may not be further trained, tuned or evaluated, thus preventing the machine learning model from being negatively impaired with wrong operator feedback on the current error.

Generally, as explained above, the operator request may be relating to or comprising one or more requests, questions or tasks to be answered or executed by the operator in relation to the current error and the one or more different errors. These requests, questions or tasks may be designed such that the trustability of the operator feedback may be assessed based thereon. Specifically with regard to part of the request, e.g. questions or tasks, for the one or more different errors, the answer or an expected operator feedback may be predefined or known, specifically to the method or control system. The expected operator feedback may be part of the different error data or the different error data may be indicative thereof. Accordingly, the method or control system may compare the operator feedback for the part of the operator request that relates to the one or more different errors to the predefined or known or expected operator feedback or answer. Based on this comparison, the trustability of the operator feedback may be assessed or, in other words, determined. Additionally, the operator request may be configured such that it connects the current error to the one or more different errors in a question or task, e.g. to have the operator answer whethere errors are similar or dissimilar. Based on that, the trustabiltiy of the operator feedback may alternatively or additionally be assessed. A part of the operator feedback relating to an answer on a part of the operator request relating to the current error can additionally be used not only for assessing the trustability but instead or additionally to evalue the current error as true or false as explained above.

The operator request may be asking the operator to confirm the current error and/or the one or more different errors as being true or false. In other words, the current error may not be true but be false. The determination or recognition of the current error is based on the error prediction model and thus on machine learning. However, the model can only be as good as the data with which it was trained. Due to the complexity and large amount of the industrial plant data that is collected from tens, hundreds or even thousands of technical equipments like sensors, actuators and so on, it is difficult to cover every single case or similar cases with training data. Accordingly, it is desirable to have the operator to confirm the current error predicted by the model as indeed being an error or anomaly or not, i.e. being a false current error and hence a false prediction or recognition by the error prediction model, which can accordingly be fed back to the machine learning model for re-training and/or tuning. Similarly, the operator can be asked to confirm the one or more different errors as being true or false. Since these errors are not from the machine learning model in the current situation of the industrial plant but e.g. may be from previous situations of the industrial plant (i.e. historical different error data), the method or control system may already know whethere these different errors are indeed true or false in the given situation of the industrial plant. Accordingly, a response of the operator on whether these different errors are true or false can be assessed to either be correct or wrong, which can be used to establish the trustability of the operator and thus their feedback on the current error.

Additionally, or alternatively to the operator request above, the operator request may be asking the operator to select at least one of the one or more different errors that is similar or dissimilar to the current error. In particular, one or more out of several different errors may be asked to be selected by the operator through the operator request that are similar or dissimilar to the current error. This type of request, question or task is additionally advantageous to assess the trustability of the operator feedback. In this regard, the operator's knowledge may be tested with regard to understanding different types of errors, whethere these are similar or dissimilar. If this operator request shows that the operator based on their operator feedback cannot distinguish between whether different errors are similar or dissimilar to the current error, then the operator feedback's trustability may be considered to be low.

Additionally, or alternatively to any of the operator requests above, the operator request may be asking the operator to confirm whether the current error and/or at least one of the one or more different errors has previously occurred or not. The operator request may further include a time or date on which that error shall have occurred or not. The time or date may be taken from historical error data or historical industrial plant data, which may be indicating previous errors or anomalies, which were classified as true. This is particularly important because typically errors or anomalies can return and show themselves over a period of time. When the operator does not correctly associate previous errors with the current error or different errors, than it can be determined that the operator cannot be trusted with their operator feedback.

At least one of the one or more different errors may be a decoy error, which is false and/or dissimilar to the current error. The decoy error may be used as a decoy for testing the operator's trustability. That decoy error or, in other words, sample may be one, which is generally false or false under the current industrial plant situation. Accordingly, when the operator indicates with their operator feedback that this decoy error is true, than the trustability of the operator feedback can be considered low. However, when the operator feedback considers the decoy error to be false, than the trustabiltiy of the operator feedback can be considered high. Similarly, the decoy error or sample may be dissimilar to the current error and the operator may be asked to indicated with their feedback whether the decoy error is similar or dissimilar to the current error. If the operator is correct with their feedback, this can increase trustability but in case the operator is wrong with their feedback, this can decrease the trustability.

At least one other of two or more different errors may be a similar error, which is similar to the current error. Accordingly, there may be at least two different errors, one of which is a decoy error and, in particular, dissimilar to the current error and the other one may be a similar error that is similar to the current error. The operator request may now be designed such that the operator needs to identify which is the decoy sample of error, i.e. unsimilar, and which is the similar sample of error, i.e. similar to the current error. Accordingly, the operator can be tested in terms of their trustability very thoroughly such that a high level of trustability can be achieved or trustability can be dismissed with high certainty.

The different error data may be obtained from historical error data indicative of previous errors in the industrial plant. Generally, the different error data may be not from current situations of the industrial plant but previous situations and may have been recorded, e.g. in the database and also, optionally, been used for training or tuning the error prediction model. The different errors may herein also be referred to as samples or samples of errors. This means that they are not actual or current errors in the industrial plant but merely samples, specifically historical samples from previous times, which are used for the purpose of providing the operator request, receiving or obtaining the operator feedback and consequently assessing the trustabiltiy based thereon. Given that the different error data is historical data unlike synthethic or simulated data, which are alternative options, the different error data delivers samples from real plant operation and is already "labeled", meaning that it is known that it is true.

The different error data may be obtained by a similarity detection model. The similarity detection model may be determining the one or more different errors as one or more similar errors that are similar to the current error and/or as one or more dissimilar errors that are dissimilar to the current error. The similary detection model may also based on machine learning or generally artificial intelligence, for example. As explained, a Siamese Neural Network may be used within or as basis of the similary detection model. The similary detection model may also be executed on the control system or, in other words, one or more computers thereof, like the error prediction model.

The current error data and/or the different error data may comprise multivariate time series data from the industrial plant. The multivariate time series data may be from various technical equipments such as sensors, actuators and other devices of the industrial plant and recorded over time, hence giving multivariate time series data.

The error prediction model may be an anomaly detection model configured to classify industrial plant data as relating to an anomal operation of the industrial plant or a normal operation of the industrial plant, wherein the current error data is obtained when the industrial plant data is classified as relating to an anomal operation. In other words, the model may be generally a classification model for classifying data. The classified data is the industrial plant data, which may be or comprise multivariate time series data from the industrial plant as explained. This industrial plant data may, when analyzed by a human operator or machine learning model, indicate a current error or anomal operation. Or, such anomality or error cannot be found, in which case there is a normal operation of the industrial plant. Normal operation herein is when there is no anomality, e.g. no sensor with measurement values exceeding certain boundaries or similar. Accordingly, the anomaly detection model may be classifying the industrial plant data as relating to anomal operation when it finds an anomaly. When doing so, the anomaly detection model may generate the current error data, which may be obtained accordingly. The current error data is now indicative of the current error or anomaly as detected by the anomaly detection model. However, the current error or anomaly has not yet been confirmed by a human operator and the method may consequently be executed to receive confirmation by a human operator that there is indeed an anomaly.

According to a second aspect of this disclosure, there are provided one or more computer program products comprising instructions which, when executed by one or more computers, cause the one or more computers to carry out the method of the first aspect of this disclosure.

The computer program product(s) may be a computer program or computer programs as such, meaning a computer program consisting of or comprising program code to be executed by the computer(s).

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

The data processing system may generally comprise one or more computers.

According to a fourth aspect of this disclosure, there is provided a control system for an industrial plant, the control system comprising the one or more computer program products of claim of the second aspect of this disclosure or the data processing system of the third aspect of this disclosure.

Generally, the control system of the industrial plant may be implemented in hardware and software as explained herein. The control system may be executing the steps of the method of the first aspect of this disclosure by means of its one or more computers.

In addition to the one or more computer program products and/or computer(s) of the data processing system, the control system may generally comprise operator or user input means, output means and/or similar as explained herein to provide the operator request and obtain the operator feedback as explained herein.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to the Figures:
- Figure 1: shows a perspective view on a control system of an industrial plant being operated by human operators;
- Figure 2: shows a schematic illustration of the control system of Fig. 1;
- Figure 3: shows a schematic flowchart of a method to be executed by the control system of Figs. 1 and 2; and
- Figure 4: shows a schematic illustration of errors as obtained in the method of Fig. 3.

The Figures are schematic only and not true to scale. In principle, identical or like parts, elements and/or steps are provided with identical or like reference numerals in the Figures.

### DETAILED DESCRIPTION OF THE INVENTION

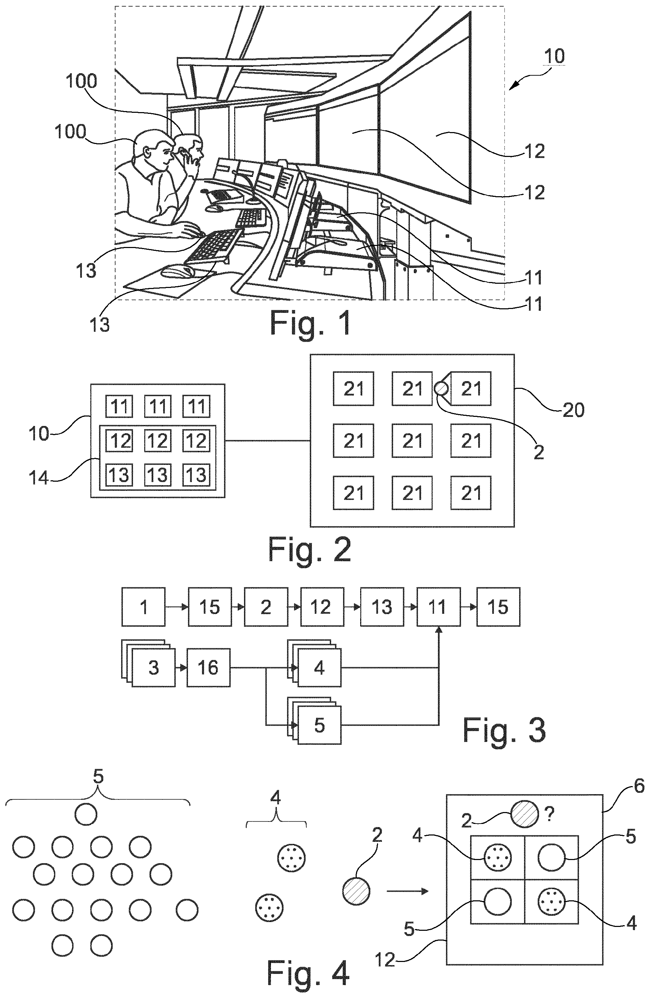

Figure 1 perspectively shows a control system 10 for controlling an industrial plant 20 (see Fig. 2). The control system 10 is shown inside a control room, in which two human operators 100 are shown to operate the control system 10 and thereby control the industrial plant 20 during its operation.

The control system 10 is shown to comprise several computers 11 in this example. Alternatively, the control system 10 may comprise one computer 11 or several spatially distributed computers 11 including cloud computers, servers, edge devices and similar, which may be located inside or outside a space of the industrial plant 20.

Further, the control system 10 is shown with an operator interface 14 (see Fig. 2), comprising several output means 12 and input means 13. In this example, the output means 12 are exemplary configured as screens or displays and the input means 13 are exemplary configured as keyboards and computer mouses.

Figure 2 schematically shows the control system 10 in relation to the industrial plant 20, to which it is connected via one or more data connections as indicated in Fig. 2. The industrial plant 20 may comprise several technical equipments or devices 21 such as but not limited to sensors, actuators and others, that may be collecting data such as sensor measurements. This data may be referred to herein as industrial plant data and be reflecting the operating of the industrial plant in a given situation or current operation. The industrial plant data may be provided to the control system 10, where these may be evaluated to control the industrial plant 20 with its technical equipments 21. Also, the industrial plant data may be at least partially indicated to the operators 100 via the output means 12.

For example, there may be cases or scenarios where the industrial plant 20, specifically one or more of the technical equipments 21, e.g. a sensor, return data, e.g. in the form of measurement values, which are unusual. In this case, there may be an error or anomaly present, which is exemplary illustrated in Fig. 2 as a current error 2 of one of the technical equipments 21 of the industrial plant 20. However, it may be difficult to assess whether this is indeed the case.

Figure 3 shows a schematic flowchart of a method to be executed by the control system 10 of Figs. 1 and 2. First, the top row of exemplary depictions of steps of the method or control system 10, in particular its one or more computers 11, are explained. The method or control system 10 may be obtaining or receiving the industrial plant data 1, which may include an error or anomaly, or the parts of the industrial plant data 1, which potentially include the error or anomaly.

This industrial plant data 1 is then forwarded to an error prediction model 15, in particular anomaly detection model, of the control system 10, which may be executed by the one or more computers 11 and be based on machine learning or, in other words, be a machine learning model. The error prediction model 15 can predict whether the industrial plant data 1 indeed comprises a current error or anomaly or not. If this is the case, the current error 2 or anomaly is recognized by the error prediction model 15.

Consequently, that current erorr 2 or anomaly can be provided on the operator interface 14, in particular on the output means 12. Here, it may be indicated that there is a potential current error 2 or anomaly as detected by the error prediction model 15.

Additionally, the operators 100 may be provided with an operator request on the operator interface 14, in particular on the output means 12, which relates to the current error 2. For example, they may be requested to give feedback whether the current error 2 is true or false, meaning e.g. whether it is really an anomaly or not in the current operation of the industrial plant 20 based on their knowledge and experience as operators 100 of the control system 10.

Second, the bottom row of exemplary depictions of steps of the method or control system 10, in particular its one or more computers 11, are explained. According to this, historical industrial plant data 3 may be obtained from e.g. a database of the control system 10. A similarity detection model 16, executed by control system 10, specifically its one or more computers 11, can be used to detect different errors from the history of the plant operation that are either similar errors 4 or dissimilar errors 5. The similar errors 4 and dissimilar errors 5 as different errors may also be herein referred to as samples since these are not from the current plant operation but based on historical operation of the industrial plant 20. These similar and dissimilar errors 4, 5 or samples are then included in the operator request on the output means 12 such that the operator request may also relate to the different errors 4, 5 or samples. For example, the operator request may be asking the operators 100 to select out of the different errors 4, 5 or samples the ones which are similar or dissimilar to the current error 2.

Based on the operator feedback received by the control system 10 on its input means 13 in response to the operator request, the control system 10 can consequently with its one or more computers 11 assess a trustability of the operator feedback (turning back to the top row of depictions in Fig. 3). For example, if the operator feedback has correctly indicated the similar and dissimilar errors 4, 5 to the current error 2, then the operator feedback can be considered to be trustable and hence, the operator feedback on whether the current error 2 is true or false can be trusted by the control system 10. Consequently, the error prediction model 15 may be further trained, tuned and/or evaluated using the operator feedback.

Figure 4 shows a schematic illustration of errors 2, 4, 5 as obtained in the method of Fig. 3 for illustrative purposes. Here, the similar errors 4 are shown as data points of the historical industrial plant data 3 next to the thereo similar current error 2. The dissimilar errors 5 are also shown as data points of the historical industrial plant data 3 but away from the thereto dissimilar current error 2 to indicate their dissimilarity.

Based on that, the operator request 6 as exemplary shown in Fig. 4 is provided on the operator interface 14, specifically the output means 12, asking the operators 100 to identify the similar or dissimilar data points, samples or errors 4, 5 to the current error 2. The operator request 6 can include a textual instruction to the operators 100, which is not shown in Fig. 4 but indicated by a question mark. Generally, the different errors 5 may be seen as decoy errors 5 selected for the operator request 6 to test the trustability of the operators 100. As shown here exemplary, within the operator request 6, different possibilities are given for the operators 100 to provide their operator feedback, in this case their choice of the respective samples or errors 4, 5.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope of the claims.

## Claims

1. A computer-implemented method for assessing trustability of operator feedback from an operator (100) of a control system (10) of an industrial plant (10), wherein the method comprises:
- obtaining current error data from an error prediction model (15) of the control system (10), wherein the current error data is indicative of a current error (2) in the industrial plant (20), and wherein the error prediction model (15) is based on machine learning;
- obtaining different error data, wherein the different error data is indicative of one or more different errors (4, 5), which are different from the current error (2);
- providing an operator request (6) on an operator interface (14) of the control system (10), wherein the operator request (6) relates to the current error (2) and the one or more different errors (4, 5);
- obtaining operator feedback from the operator (100) on the operator interface (14) in response to the operator request (6) provided thereon; and
- assessing the trustability of the operator feedback based on the operator feedback, the current error data and the different error data.

2. The method of claim 1, wherein the method further comprises:
- evaluating, based on the operator feedback, the current error (2) as true or false depending on the assessed trustability of the operator feedback.

3. The method of claim 1 or 2, wherein, depending on the assessed trustability of the operator feedback, the method further comprises:
- training, tuning or evaluating the error prediction model (15) based on the operator feedback.

4. The method of any one of the previous claims, wherein the operator request (6) is asking the operator (100) to confirm the current error and/or the one or more different errors as being true or false.

5. The method of any one of the previous claims, wherein the operator request is asking the operator (100) to select at least one of the one or more different errors (4, 5) that is similar or dissimilar to the current error (2).

6. The method of any one of the previous claims, wherein the operator request (6) is asking the operator (100) to confirm whether the current error (2) and/or at least one of the one or more different errors (4, 5) has previously occurred or not.

7. The method of any one of the previous claims, wherein at least one of the one or more different errors (4, 5) is a decoy error (5), which is false and/or dissimilar to the current error (2).

8. The method of claim 7, wherein at least one other of two or more different errors (4, 5) is a similar error (4), which is similar to the current error (5).

9. The method of any one of the previous claims, wherein the different error data is obtained from historical error data (3) indicative of previous errors in the industrial plant (20).

10. The method of any one of the previous claims, wherein the different error data is obtained by a similarity detection model (16), the similarity detection model (16) determining the one or more different errors (4, 5) as one or more similar errors (4) that are similar to the current error (2) and/or as one or more dissimilar errors (5) that are dissimilar to the current error (2).

11. The method of any one of the previous claims, wherein the current error data and/or the different error data comprises multivariate time series data from the industrial plant (20).

12. The method of any one of the previous claims, wherein the error prediction model (15) is an anomaly detection model configured to classify industrial plant data (1) as relating to an anomal operation of the industrial plant (20) or a normal operation of the industrial plant (20), wherein the current error data is obtained when the industrial plant data (1) is classified as relating to an anomal operation.

13. One or more computer program products comprising instructions which, when executed by one or more computers (11), cause the one or more computers (11) to carry out the method of any one of the previous claims.

14. A data processing system configured to carry out the method of any one of claims 1 to 13.

15. A control system (10) for an industrial plant (20), the control system (10) comprising the one or more computer program products of claim 13 or the data processing system of claim 14.
